# FASCICULE DE BREVET EUROPEEN

(11) **EP 3 795 341 B1**
(45) Date de publication et mention de la délivrance du brevet: **27.04.2022**
(21) Numéro de dépôt: 20196722.1
(22) Date de dépôt: 17.09.2020
(51) Int. Cl.: B29C 70/08, B29C 70/12, G04B 37/00

(54) **COMPOSANT HORLOGER EN COMPOSITE FORGÉ**
UHRWERKSKOMPONENTE AUS GESCHMIEDETEM VERBUNDWERKSTOFF
TIMEPIECE COMPONENT MADE OF FORGED COMPOSITE

(30) Priorité: 23.09.2019 CH 12152019
(43) Date de publication de la demande: 24.03.2021
(73) Titulaire: Manufacture d'Horlogerie Audemars Piguet SA, 1348 Le Brassus (CH)
(72) Inventeur: Le Loarer, Thibaut, 74270 Chavannaz (FR)
(74) Mandataire: P&TS SA (AG, Ltd.)

(56) Documents cités:
- CN-A- 1 683 712
- US-A1- 2011 259 677

## Description

### Domaine technique

La présente invention se rapporte au domaine des composants horlogers en matériau composite.

### Etat de la technique

On connait les matériaux composites classiques composés de fibres tissées dans une matrice polymère. On peut citer par exemple les matériaux à base de fibres de carbone, d'aramide, de basalte, de verre ou de polyazole (PBO), combinées à une résine polymère. Ces matériaux sont légers et présentent de bonnes propriétés mécaniques. En revanche, ils sont difficiles à mettre en oeuvre pour de petites pièces et pour des formes complexes du fait de l'étape de drapage.

On connait également des matériaux composites pré-imprégnés sous forme de fils de carbone déposés dans un moule en couches successives et à des orientations données, puis chauffés sous forte pression pour la formation de bloc ou de préforme. Là encore, la mise en oeuvre de pièces complexes et petites n'est obtenue qu'en réalisant un bloc et en usinant ce dernier.

On connait également des matériaux composites composés d'une matrice polymère et de fibres coupées, principalement de carbone, et déposées dans un moule avec la matrice avant d'être pressées à chaud ; ces composites sont souvent dénommés « carbones forgés ». Ce procédé permet d'obtenir directement des pièces complexes car l'étape de drapage est éliminée et la pièce peut être utilisée sans retouche.

On connait les composites composés de fibres de carbone et de fibres d'aramide, les fibres d'aramide permettant une augmentation des propriétés mécaniques des pièces de carbone. Les fibres d'aramide se coupant très difficilement, ces composites sont exclusivement présents sous forme de tissus et sont soit pré-imprégnés avant utilisation, soit imprégnés durant l'étape de formation de la forme souhaitée.

On connait les composites composés d'une matrice polymère et d'un mélange de fibres de carbone et de fibres de verre. Les fibres pouvant être tissées, ou encore coupées puis mélangées comme dans le composite commercialisé sous différentes marques comme le Carbonium^{®}. Les fibres de verre de ce composite pouvant être également aluminisées ou colorées pour une esthétique particulière. Les fibres de verre présentent une esthétique similaire, un coût moindre mais leurs propriétés mécaniques sont inférieures aux autres fibres précédemment citées et notamment les fibres PBO.

On connait enfin les fibres de polymères à cristaux liquides, notamment les polyazoles parmi lesquels le poly(p-phénylène-2,6-benzobisoxazole)- PBO, dont les propriétés mécaniques sont supérieures aux fibres d'aramide et pour la plupart, supérieures à celles des fibres de carbone.

Les matériaux actuellement disponibles ne réunissent pas l'ensemble des caractéristiques recherchées pour réaliser des composants horlogers, à savoir notamment, de bonnes propriétés mécaniques tout en restant légers, une bonne résistance à l'abrasion et aux chocs, une mise en oeuvre aisée, facilement usinable, adaptés à la fabrication de petites pièces avec des géométries complexes et des possibilités d'esthétiques variées.

CN1683712A divulgue un matériau composite composé d'une matrice à base de polymère et de renfort, le renfort est constitué de fibres d'au moins deux natures différentes sous la forme coupée dont l'une est un polyazole.

### Divulgation de l'invention

Le but de l'invention est de proposer un composant horloger à partir d'un tel matériau permettant notamment de réaliser des pièces d'habillage.

Ce but est atteint par un composant horloger composé d'une matrice polymère et d'un renfort constitué d'un mélange de fibres d'au moins deux natures différentes dont l'une est un PBO. Le mélange de fibres sous-entend que l'on utilise des fibres sous la forme coupée et non pas sous la forme tissée.

Selon une variante de l'invention, la ou les secondes natures de fibres sont choisies parmi les fibres de carbone, les fibres de basalte, les fibres de verre, les fibres naturelles et les fibres céramique, ce qui permet de meilleures tenues aux températures (basalte), à la résistance à l'usure (céramique) ou à la rigidité (carbone, verre R).

Selon une variante de l'invention, les fibres ont une longueur comprise entre 2mm et 70mm, préférentiellement entre 4mm et 50mm permettant la réalisation de pièces complexes de faibles dimensions.

Selon une variante de l'invention, le renfort comporte en poids entre 20% à 80% de fibres de PBO.

Selon une variante de l'invention, le renfort comporte en poids entre 0% et 80% de fibres de carbone.

Selon une variante de l'invention, le renfort comporte en poids entre 0% et 80% de fibres de basalte.

Selon une variante de l'invention, la matrice est un polymère thermodurcissable.

Selon une variante de l'invention, la matrice est un polymère thermoplastique.

Selon une variante de l'invention, la part massique de la matrice par rapport aux renforts est comprise entre 25% et 50%.

Selon une variante de l'invention, la matrice présente une dureté supérieure à 400Hv.

Selon une variante de l'invention, la matrice présente une résistance à la température supérieure à 150° C.

Selon une variante de l'invention, des nano ou micro charges sont ajoutées à la matrice entre 0% et 4% en poids de la matrice.

Selon une variante de l'invention, les nano ou micro charges sont choisies parmi les nanotubes de carbone, le graphène, les pigments, les charges minérales ou les particules de métaux précieux.

Selon une variante de l'invention, les pigments présentent une couleur identique dans le spectre visible et sous UV.

Selon une variante de l'invention, les pigments présentent une couleur différente dans le spectre visible et sous UV.

Selon une variante de l'invention, les pigments présentent une couleur différente dans le spectre visible et sous Infra-rouges.

### Description des figures

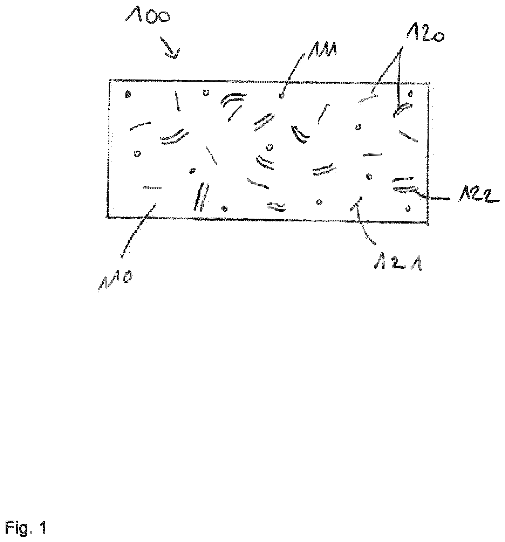

La figure 1 est une vue schématique d'un composant horloger selon l'invention.

### Mode de réalisation de l'invention

L'invention propose un composant horloger réalisé d'un matériau composite 100 à base d'une matrice polymère 110 et d'un renfort 120 en fibres coupées composé d'au moins deux natures de fibres, les premières fibres 121 étant du PBO, par exemple commercialisées sous la marque Zylon^{®}, la ou les autres secondes fibres 122 étant sélectionnées parmi les fibres de carbone, de basalte, de verre, les fibres naturelles, de céramique ou leurs mélanges.

Les fibres sont coupées à une longueur comprise entre 2mm et 70mm, préférentiellement entre 4mm et 50mm.

Les différentes natures de fibres peuvent également être coupées à des longueurs différentes.

Un ajout de micro ou nano charges 111 (nanotubes de carbone, de graphène, pigments colorés dans le visible, l'UV ou l'infra-rouge, charges minérales ou particules de métaux précieux tels que Au ou Pt) peuvent améliorer certaines propriétés du matériau composite, mécanique, esthétique ou anti-contrefaçon.

L'une ou l'ensemble des natures de fibres peuvent être préalablement imprégnées de matrice, désigné communément par prépeg par l'homme de l'art.

La matrice 110 qui est ajoutée au renfort 120 pour former le composite revendiqué par l'invention peut être de nature thermodurcissable (epoxy, polyester, vinyl ester, polyuréthane, bismaleimide etc.) ou de nature thermoplastique (nylon, polycarbonate, PPS, PEKK, PEEK, PAEK etc.).

Préférentiellement la matrice 110 est choisie de nature thermodurcissable pour ses propriétés accrues de résistance à l'abrasion et aux chocs. La matrice une fois réticulée, présentera une dureté supérieure à 400 Hv (vickers).

La matrice 110 pourra, dans une version de l'invention, être colorée par des pigments ou colorants pour des raisons esthétiques.

Les fibres étant disposées de façon aléatoire, les composants en matériau composite ainsi obtenues sont uniques, ce qui permet un moyen d'identification et d'authentification.

Un exemple de procédé de fabrication du composant horloger selon l'invention consiste, dans une première étape à sélectionner les natures de fibres coupées, dans une seconde étape à combiner la première nature de fibres 121 avec au moins une seconde nature de fibres 122. Dans une troisième étape, les fibres sont placées dans un moule avec la matrice 110. La matrice représentera selon sa nature et le choix des fibres une proportion massique du composite final comprise entre 25% et 45%. Dans une quatrième étape le moule est fermé. La cinquième étape consiste en la réticulation du matériau composite qui est réalisée par un cycle de température (chauffage, paliers, refroidissement) et sous pression (constante ou variable) afin de permettre à la matrice 110 de venir remplir l'ensemble des cavités du moule. Dans une sixième étape, la pièce est démoulée. Une septième étape optionnelle consiste à rectifier la pièce et/ou réaliser des décorations telles qu'un sablage, un satinage etc.

Selon une variante avantageuse de l'invention, l'ensemble des fibres peuvent directement être placées dans le moule, les deuxièmes et troisièmes étapes étant alors fusionnées.

Les exemples ci-dessous illustrent différentes variantes composant horloger revendiqué, présentant une résistance mécanique supérieure aux pièces réalisées en carbone forgé, carbone/verre forgé ou basalte forgé avec une esthétique différente.

**Exemple 1** : composant en matériau composé d'une matrice et de renfort tel que :
a. la matrice est une résine epoxy, représentant 30% du poids du composite.
b. le renfort est constitué d'un mélange de fibres :
   i. de fibres de PBO, référence Zylon^{®} grad HM d'une longueur de 20mm pour 40% massique du renfort.
   ii. de fibres de basalte de longueur 25mm pour 5% massique du renfort.
   iii. de fibres de carbone de longueur 30mm pour 55% du renfort.

Le renfort est placé dans un moule représentant le négatif d'un composant horloger, ici, une lunette. La matrice est ajoutée et le moule est fermé par la seconde contre forme. Le moule est ensuite placé dans une presse chauffante afin d'appliquer un cycle de pression et température pour permettre la répartition homogène et la réticulation de la résine.

Le composant est ensuite démoulé puis la face supérieure de la lunette est satinée. Le composant en composite forgé Zylon^{®}-carbone-basalte est utilisée dans l'assemblage d'une montre. Ce composant présente une meilleure ténacité et un poids réduit comparé à la pièce équivalente ne comportant qu'un renfort en carbone.

**Exemple 2** : Composant dans un matériau composé d'une matrice et de renfort tel que :
a. la matrice est une résine époxy, représentant 35% du poids du composite.
b. le renfort est constitué d'un mélange de fibres :
   i. de fibres de PBO, d'une longueur de 30mm pour 20% massique.
   ii. de fibres de carbone, de longueur 50mm pour 45% et de longueur 35mm pour 35% massique.

Le renfort est placé dans un moule représentant le négatif d'un composant horloger, notamment une lunette. Des particules de métal précieux, notamment de l'or (Au), sont ajoutées pour un poids de 1% par rapport au renfort. La matrice est ensuite ajoutée et le moule est fermé par la contre forme. Le procédé est ensuite identique à celui de l'exemple 1. Le composant en composite forgé PBO-carbone avec insert en or (Au) ainsi obtenu, présente une meilleure ténacité, une esthétique différente et un poids allégé par rapport à la pièce équivalente en « carbone forgé » ne comportant qu'un renfort.

**Exemple 3** : Composant horloger composé d'une matrice et de renfort tel que :
a. la matrice est une résine polyuréthane, représentant 25% du poids du composite.
b. le renfort est constitué d'un mélange de fibres :
   i. de fibres de PBO, d'une longueur de 40mm pour 50% massique.
   ii. de fibres de basalte, de longueur 50mm pour 50% massique.

Le renfort est placé dans un moule représentant le négatif d'un composant horloger, notamment une carrure. Des nanoparticules de graphène sont ajoutées pour un poids de 3% par rapport au renfort.

La matrice est ensuite ajoutée et le moule est fermé par les autres parties de la contre forme de la carrure.

La suite du procédé est identique à celui de l'exemple 1.

La pièce ainsi obtenue en PBO-basalte forgé renforcé graphène présente de meilleures propriétés mécaniques, une esthétique différente et un poids allégé par rapport à la pièce équivalente ne comportant qu'un renfort en basalte.

**Exemple 4** : Composant horloger composé d'une matrice et de renfort tel que :
a. la matrice est une résine polyuréthane, représentant 45% du poids du composite. La résine est préalablement mélangée avec des pigments de sécurité apparaissant blanc (dit invisible) dans le spectre visible et luminescents orange sous l'éclairage d'une lampe de Wood émettant à la longueur d'onde de 365nm, pour un poids de 2% par rapport à la matrice.
b. le renfort est constitué d'un mélange de fibres :
   i. de fibres de PBO, d'une longueur comprise entre 5mm et 25mm pour 70% massique.
   ii. de fibres de carbone, de longueur comprise entre 4mm et 30mm pour 20% massique.
   iii. de fibres de verre, de longueur comprise entre 4mm et 20mm pour 10% massique.

Le renfort est placé dans un moule représentant le négatif du composant horloger, notamment une carrure. Le moule est fermé par les autres parties de la contre forme de la carrure et la matrice est injectée sous pression.

La suite du procédé est identique à celui de l'exemple 1.

La pièce est ensuite démoulée. La pièce en composite forgé Zylon^{®}-carbone-basalte est utilisée dans l'assemblage d'une montre. Ce composant présente une meilleure ténacité et un poids réduit comparé à la pièce équivalente ne comportant qu'un renfort en carbone. De plus, ce composant est identifiable et authentifiable sous lumière UV où les particules présentent une illumination orange.

**Exemple 5** : Composant horloger composé d'une matrice et de renfort tel que :
a. la matrice est une résine thermoplastique Victrex^{®} composée de PEEK (PolyEtherEtherKetone) et de carbone, représentant 30% du poids du composite.
b. le renfort est constitué d'un mélange de fibres :
   i. de fibres de PBO, d'une longueur comprise entre 10mm et 50mm pour 80% massique.
   ii. de fibres de carbone, d'une longueur comprise entre 4mm et 60mm pour 20% massique.

La résine époxy et un durcisseur sont mélangés pour obtenir une matrice homogène. Les fibres du renfort sont mélangées mécaniquement à la matrice. Le mélange matrice/renfort est ensuite placé dans un moule représentant le négatif d'une des surfaces d'un composant horloger, notamment une platine. Le moule est chauffé puis mis en pression afin de permettre une répartition homogène de la résine dans la pièce moulée. A la fin du cycle pression/température, la pièce est extraite du moule puis usinée par des moyens traditionnels pour obtenir la pièce finale souhaitée. Le composant présente une ténacité et une légèreté supérieures à une pièce 100% carbone, et une esthétique différente.

## Revendications

1. Composant horloger (100) composé d'une matrice (110) à base de polymère et de renfort (120) **caractérisé en ce que** le renfort (120) est constitué de fibres d'au moins deux natures différentes (121, 122) sous la forme coupée dont l'une est un polyazole.

2. Composant horloger selon la revendication précédente, **caractérisé en ce que** la ou les secondes natures de fibres (122) sont choisies parmi les fibres de carbone, les fibres de basalte, les fibres de verre, les fibres naturelles et les fibres de céramique,

3. Composant horloger selon l'une des revendications précédentes, **caractérisé en ce que** les fibres ont une longueur comprise entre 2mm et 70mm.

4. Composant horloger selon l'une des revendications précédentes, **caractérisé en ce que** les fibres ont une longueur comprise entre 4mm et 50mm.

5. Composant horloger selon l'une des revendications précédentes, **caractérisé en ce que** le renfort comporte en poids entre 20% à 80 % de fibres de polyazole.

6. Composant horloger selon l'une des revendications précédentes, **caractérisé en ce que** le renfort comporte en poids entre 0% et 80% de fibres de carbone.

7. Composant horloger selon l'une des revendications précédentes, **caractérisé en ce que** le renfort comporte en poids entre 0% et 80% de fibres de basalte.

8. Composant horloger selon l'une des revendications précédentes, **caractérisé en ce que** la matrice (110) est un polymère.

9. Composant horloger selon l'une des revendications précédentes, **caractérisé en ce que** la part massique de la matrice par rapport aux renforts est comprise entre 25% et 50%.

10. Composant horloger selon l'une des revendications précédentes, **caractérisé en ce que** des nano ou micro charges (111) sont ajoutées à la matrice entre 0% et 4% en poids de la matrice.

11. Composant horloger selon la revendication précédente, **caractérisé en ce que** les nano ou micro charges (111) sont choisies parmi les nanotubes de carbone, le graphène, les pigments, les charges minérales ou les particules de métaux précieux.

12. Composant horloger selon la revendication précédente, **caractérisé en ce que** la matrice comporte des pigments présentant une couleur identique dans le spectre visible et sous UV.

13. Composant horloger selon la revendication 11, **caractérisé en ce que** les pigments présentent une couleur différente dans le spectre visible et sous UV.

14. Composant horloger selon la revendication 11, **caractérisé en ce que** les pigments présentent une couleur différente dans le spectre visible et sous infra-rouges.

## Patentansprüche

1. Uhrenbauteil (100), das aus einer Matrix (110) auf Polymerbasis und einer Verstärkung (120) besteht, **dadurch gekennzeichnet, dass** die Verstärkung (120) aus Fasern von mindestens zwei verschiedenen Arten (121, 122) in geschnittener Form besteht, von denen eine ein Polyazol ist.

2. Uhrenbauteil nach dem vorhergehenden Anspruch, **dadurch gekennzeichnet, dass** die zweite(n) Faserart(en) (122) aus Kohlenstofffasern, Basaltfasern, Glasfasern, Naturfasern und Keramikfasern ausgewählt ist (sind).

3. Uhrenbauteil nach einem der vorhergehenden Ansprüche, **dadurch gekennzeichnet, dass** die Fasern eine Länge zwischen 2 mm und 70 mm aufweisen.

4. Uhrenbauteil nach einem der vorhergehenden Ansprüche, **dadurch gekennzeichnet, dass** die Fasern eine Länge zwischen 4 mm und 50 mm aufweisen.

5. Uhrenbauteil nach einem der vorhergehenden Ansprüche, **dadurch gekennzeichnet, dass** die Verstärkung zwischen 20 Gew.-% und 80 Gew.-% Polyazolfasern umfasst.

6. Uhrenbauteil nach einem der vorhergehenden Ansprüche, **dadurch gekennzeichnet, dass** die Verstärkung einen Gewichtsanteil zwischen 0% und 80% von Kohlenstofffasern aufweist.

7. Uhrenbauteil nach einem der vorhergehenden Ansprüche, **dadurch gekennzeichnet, dass** die Verstärkung in Gewichtsprozent zwischen 0% und 80% Basaltfasern umfasst.

8. Uhrenbauteil nach einem der vorhergehenden Ansprüche, **dadurch gekennzeichnet, dass** die Matrix (110) ein Polymer ist.

9. Uhrenbauteil nach einem der vorhergehenden Ansprüche, **dadurch gekennzeichnet, dass** der Massenanteil der Matrix im Verhältnis zu den Verstärkungen zwischen 25% und 50% beträgt.

10. Uhrenbauteil nach einem der vorhergehenden Ansprüche, **dadurch gekennzeichnet, dass** der Matrix Nano- oder Mikrofüllstoffe (111) zwischen 0% und 4% des Gewichts der Matrix zugesetzt werden.

11. Uhrenbauteil nach dem vorhergehenden Anspruch, **dadurch gekennzeichnet, dass** die Nano- oder Mikrofüllstoffe (111) aus Kohlenstoffnanoröhren, Graphen, Pigmenten, mineralischen Füllstoffen oder Edelmetallpartikeln bestehen.

12. Uhrenbauteil nach dem vorhergehenden Anspruch, **dadurch gekennzeichnet, dass** die Matrix Pigmente enthält, die im sichtbaren Spektrum und unter UV-Licht eine identische Farbe aufweisen.

13. Uhrenbauteil nach Anspruch 11, **dadurch gekennzeichnet, dass** die Pigmente im sichtbaren Spektrum und unter UV-Licht eine unterschiedliche Farbe aufweisen.

14. Uhrenbauteil nach Anspruch 11, **dadurch gekennzeichnet, dass** die Pigmente im sichtbaren und im infraroten Spektrum eine unterschiedliche Farbe aufweisen.

## Claims

1. Timepiece component (100) made up of a polymer-based matrix (110) and a reinforcement (120), **characterized in that** the reinforcement (120) consists of fibres of at least two different kinds (121, 122) in cut form, one of which is a polyazole.

2. Timepiece component according to the preceding claim, **characterized in that** the second kind(s) of fibres (122) is/are chosen from carbon fibres, basalt fibres, glass fibres, natural fibres and ceramic fibres.

3. Timepiece component according to either of the preceding claims, **characterized in that** the fibres have a length of between 2 mm and 70 mm.

4. Timepiece component according to one of the preceding claims, **characterized in that** the fibres have a length of between 4 mm and 50 mm.

5. Timepiece component according to one of the preceding claims, **characterized in that** the reinforcement comprises between 20% and 80% by weight of polyazole fibres.

6. Timepiece component according to one of the preceding claims, **characterized in that** the reinforcement comprises between 0% and 80% by weight of carbon fibres.

7. Timepiece component according to one of the preceding claims, **characterized in that** the reinforcement comprises between 0% and 80% by weight of basalt fibres.

8. Timepiece component according to one of the preceding claims, **characterized in that** the matrix (110) is a polymer.

9. Timepiece component according to one of the preceding claims, **characterized in that** the mass proportion of the matrix with respect to the reinforcements is between 25% and 50%.

10. Timepiece component according to one of the preceding claims, **characterized in that** nano- or micro-fillers (111) are added to the matrix in a proportion of between 0% and 4% by weight of the matrix.

11. Timepiece component according to the preceding claim, **characterized in that** the nano- or micro-fillers (111) are chosen from carbon nanotubes, graphene, pigments, mineral fillers or particles of precious metals.

12. Timepiece component according to the preceding claim, **characterized in that** the matrix comprises pigments having an identical colour in the visible spectrum and under UV radiation.

13. Timepiece component according to Claim 11, **characterized in that** the pigments have a different colour in the visible spectrum and under UV radiation.

14. Timepiece component according to Claim 11, **characterized in that** the pigments have a different colour in the visible spectrum and under infrared radiation.
